(19) Europäisches Patentamt
European Patent Office
Office européen des brevets

(11) **EP 4 459 315 A1**

(12) **EUROPEAN PATENT APPLICATION**

(43) Date of publication:
**06.11.2024  Bulletin 2024/45**

(21) Application number: **23171093.0**

(22) Date of filing: **02.05.2023**

(51) International Patent Classification (IPC):
**G01S 7/35** *(2006.01)*     **G01S 7/40** *(2006.01)*
**G01S 13/44** *(2006.01)*     **G01S 13/58** *(2006.01)*
**G01S 13/931** *(2020.01)*     G01S 13/34 *(2006.01)*

(52) Cooperative Patent Classification (CPC):
**G01S 7/356; G01S 7/403; G01S 7/4091;**
**G01S 13/44; G01S 13/4418; G01S 13/584;**
**G01S 13/931;** G01S 13/34; G01S 2013/93271;
G01S 2013/93272; G01S 2013/93274

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Aptiv Technologies AG**
**8200 Schaffhausen (CH)**

(72) Inventor: **LESSMANN, Stephanie**
**40699 Erkrath (DE)**

(74) Representative: **Bardehle Pagenberg**
**Partnerschaft mbB**
**Patentanwälte Rechtsanwälte**
**Prinzregentenplatz 7**
**81675 München (DE)**

(54) **METHOD FOR CALIBRATION OF A RADAR SENSOR**

(57)     The present disclosure relates to a computer-implemented method (1) for calibration of a radar sensor, the method (1) comprising: obtaining (5) measurement data from a radar sensor by one or more radar signals, the measurement data being indicative of a radial velocity of an object and comprises a range dimension, determining (20), based on the obtained measurement data, one or more data sets indicative of a variation of the one or more radar signals, determining (30), based on the one or more data sets and/or based on the obtained measurement data, angle data relating to the object, calibrating (60), based on the one or more data sets and the angle data, the radar sensor.

Fig. 2

## Description

## Field of the invention

The present disclosure relates to a computer-implemented method for antenna calibration of radar sensors. Further, the present disclosure relates to a respective data processing apparatus, a computer program and a vehicle comprising the apparatus.

## Background

Nowadays, vehicles (cars, ships, robots etc.) are oftentimes operated using vehicle assistance systems (e.g., such as an Advanced Driving Assistance Systems, ADAS) to provide some degree of driving assistance to the driver. Additionally, the vehicle assistant system may also be able to control a vehicle semi-autonomously or even fully autonomously. For this purpose, objects in the environment need to be detected.

For such detection, imaging sensors can be employed to obtain the required data to determine objects and/or classify the surrounding in the environment of a vehicle. However, such sensors do not yield optimum results under all circumstances (e.g. under certain weather conditions).

Another option for such detection are automotive radar sensors, which are becoming more and more important in various of such ADAS applications. These sensors facilitate, among others, target detection, collision detection, driver control, and target velocity estimation. Further, radar sensors are relatively inexpensive, have a long range and are less weather dependent than other types of sensors. By virtue of this, radar sensors have seen a growth in popularity. One commonly used type of radar is a FMCW radar.

Raw signal data is received by the radar sensors and must be processed and/or calibrated in order to detect objects of interest. Presently various methods are known for these purposes. For instance, calibration in a chamber can be employed (offline calibration), which requires several offline measurements to ensure robustness. However, such a calibration approach is cost-intensive and time consuming.

Therefore, there is a need to provide a method and system for improving calibration of radar sensors.

## Summary of the invention

Aspects of the present disclosure are set out in the accompanying independent and dependent claims. Combinations of features from the dependent claims may be combined with features of the independent claims as appropriate and not merely as explicitly set out in the claims.

In an aspect, the present invention concerns a computer-implemented method for calibration of a radar sensor, the method comprising: obtaining measurement data from a radar sensor by one or more radar signals, the measurement data being indicative of a radial velocity of an object and wherein the measurement data comprises a range dimension, determining, based on the obtained measurement data, one or more data sets indicative of a variation of the one or more radar signals, determining, based on the one or more data sets and/or based on the obtained measurement data, angle data relating to the object, and calibrating, based on the one or more data sets and the angle data, the radar sensor.

In this manner, the method provides the advantage that an efficient calibration can be performed without the need to perform a chamber calibration. In particular no initial chamber calibration needs to be performed. This makes the method useful and attractive for various applications. The method facilitates a more robust calibration, in particular when moving targets are tracked. In one example, the calibration of the radar sensor may be an online calibration of the radar sensor.

The method has the further advantage that obtaining range values by way of the radar sensor is not necessary for the purpose of the calibration. However, it is understood that the range dimension of the radar data cube is employed in the method disclosed herein. In particular, said range dimension may be used to obtain/calculate/determine further data from the measurement data as described elsewhere herein. The range dimension may contain range samples or fast-time samples.

The method comprises the step of calibrating the radar sensor, which could mean that any kind of elements of the radar sensor is calibrated. However, in the context of the present disclosure calibrating usually means that one or more antennas of the radar sensor are calibrated. It may be possible that further technical components of a radar are calibrated, such as mounting poses, or the like.

In one example, in case a calibration of the radar sensor has already been performed, angle data obtained from beamvectors from the radar data cube could be employed as an additional information. For instance, this may be used as a prior or cross-check for the method.

In a preferred embodiment, the method is further comprising obtaining information of one or more antennas of the radar sensor and of expected ideal measurements, wherein the method further comprises calculating, based on the one or more data sets, the angle data, and the information, one or more processed data sets, wherein calibrating is based on the one or more processed data sets.

The processed data sets, which are calculated, have the advantage that calibrating of the radar sensor is further improved.

In a preferred embodiment of the computer-implemented method according to the present disclosure, calculating comprises weighting of one or more values of the one or more data sets.

In one example, weighting could mean to increase and/or decrease one or more values. In particular, the obtained angle data relating to the object (in particular the obtained angle data by employing the radial velocity as described elsewhere herein) may not be equally distributed along an angular spectrum. Thereby, weighting has the benefit of improving calibrating the radar sensor.

In a further preferred embodiment of the computer-implemented method according to the present disclosure, weighting of the one or more values of the one or more data sets is based on one or more of the following: the angle data; the radial velocity; a current motion of the radar sensor; a resolution of the radial velocity, preferably, wherein weighting of the one or more values of the one or more data sets is based on the derivate of the function angle of radial velocity.

In this manner, acknowledgement of further information for weighting has the benefit that any unequal distribution along the angular spectrum may be alleviated. It is noted that the angle data may only be used optionally for weighting.

The derivative of the function may be understood as the variation of the angle with respect to the radial velocity. This derivative could be retrieved from a velocity profile, provided by the measurement data indicative of the radial velocity, in one example. The resolution of the radial velocity may be understood as the doppler resolution, which is an important parameter as it may be indicative of how well an object could be observed/detected at different radial velocities.

In a preferred embodiment of the computer-implemented method according to the present disclosure, weighting of the one or more values of the one or more data sets is performed by scaling ideal beamvectors, wherein the ideal beamvectors are based on a structural arrangement of the radar sensor and/or on an additional angle data relating to the object.

The additional angle data relating to the object may be retrieved by a phase difference of the signal (e.g., an electromagnetic wave) received at the radar sensor from antennas, in particular from different spatially separated antennas.

The additional angle data may require a pre-calibration matrix (e.g., employing a chamber calibration). Alternatively or additionally, this could require a calibration matrix from previous scans as described herein.

An ideal beamvector may depend on the geometry of an array of receivers of the radar sensor and/or an angle obtained from angle from range rate, AFRR.

In a further preferred embodiment of the computer-implemented method according to the present disclosure, determining the angle data relating to the object comprises ambiguous angle data and the method comprises a disambiguation process, wherein, optionally, determining the angle data relating to the object comprises ambiguous angle data and the method does not comprise a disambiguation process.

The obtained measurement data, such as the obtained one being indicative of the radial velocity of the object may be ambiguous.

For overcoming such ambiguous data, a disambiguation process may be applied. This may be implemented by performing a pre-calibration. In particular, this pre-calibration may be performed offline.

The inventors found that the disambiguation process does not necessarily have to be performed. In such a case, i.e., when dispensing with the disambiguation process, artificial ideal ambiguous beamvectors may be created. As an example, such artificial ideal ambiguous beamvectors could be a superposition of the expected measurement from ambiguous directions.

In a preferred embodiment of the computer-implemented method according to the present disclosure, determining the one or more data sets indicative of a variation of the one or more radar signals comprises accumulation over the range dimension of the measurement data.

Accumulation over the range dimension of the measurement data improves determining the one or more data sets indicative of a variation as described herein. In particular, said accumulation over the range dimension has the advantage that multiple artificial snapshots may be provided. In one example, this may be understood such that, without actually measuring and or processing the range of an object, the range dimension provides additional samples for the accumulation process. Accumulation over the range dimension of the measurement may comprise an autocorrelation.

Accordingly, the accumulation allows to reduce and/or remove the range dimension in the radar data cube. Rather, artificial snapshots are employed. It is noted that various methods of the prior art cannot cope with accumulation over the range and, hence, necessitate different processing.

In a further preferred embodiment, calculating the one or more processed data sets comprises accumulation over the radial velocity (i.e., doppler) dimension. Optionally, such accumulation over the radial velocity dimension may comprise additional processing, such as additional processing between each time said accumulation is performed. In one example, accumulation over the radial velocity may be understood such that also cross correlations with ideal beamvectors, which may be determined by angle from range rate, AFRR, are taken into account. Similar advantages as set forth above with respect to the accumulation over the range dimension are applicable in here.

In a further preferred embodiment of the computer-implemented method according to the present disclosure, determining the angle data relating to the object comprises determining the angle data from the radial velocity of the measurement data, preferably for each radial velocity of the measurement data.

In this manner, determining the angle data relating to the object entails radial velocity calculations. In particular, it may comprise using the radial velocity, ego-motion of the radar sensor and/or the vehicle comprising said radar sensor, and information of the radar sensor, such as a mounting pose in the vehicle. Determining the angle data from the radial velocity may be performed using a velocity profile equation.

In one example, the radial velocity measurement constitute one dimension of the radar data cube. Further, a mapping from said radial velocity to measurements of beamvectors may be provided. Based on this, the angle data may be determined.

When accumulation is performed, determining the angle data relating to the object may be employed within said accumulation process.

In a preferred embodiment of the computer-implemented method according to the present disclosure, wherein the step of obtaining measurement data, the step of determining the one or more data sets, and the step of determining angle data are performed one or more times, preferably a plurality of times, wherein performing the plurality of times is stopped when a stopping criteria is fulfilled, wherein, preferably, the stopping criteria comprises and/or is based on one or more of the following:

- the determination of the angle data relating to the object, preferably a predefined fill-rate of a histogram based on the determination of the angle data relating to the object;

- a predefined number of the plurality of times;

- a predefined quality of the calibration step for the radar sensor, such as a quality based on angles obtained using the calibrated radar sensor.

The fill-rate of the (range rate) histogram is a promising indicator for stopping performing the plurality of times. In particular, in order to estimate a sufficient calibration matrix the full array manifold of the radar sensor may need to be obtained. This means that substantially every angular direction (e.g., given by a grid) should be measured. An indicator thereof may be the fill-rate of the (range rate) histogram.

The quality of the calibration matrix may be assessed based on the angles obtained by angle finding using the calibration matrix. For instance, once antennas of the radar sensor are calibrated, a comparison can be made by employing detections with the calibration matrix.

In a further preferred embodiment of the computer-implemented method according to the present disclosure, the measurement data is further indicative of one or more of the following: a range of the object; an ego-motion of the radar sensor and/or of a vehicle comprising the radar sensor; information of the radar sensor arrangement, such as a structural arrangement of the radar sensor in a vehicle.

As noted elsewhere herein, provision of the range of the object is merely optional, as the method provided by the inventors substantially relies on measurement data indicative of the radial velocity.

The structural arrangement may comprise a location of the radar sensor with respect to the vehicle. For instance, the structural arrangement may include whether the radar sensor is located on a side of the vehicle or the like.

In one example, the range of the object may be used to provide additional information about a strength of the signal of the object. That is, because the radar cross-section (RCS) (i.e., a measure of how detectable an object is by radar) may depend on the range of the object. Thereby, this additional information could be used to filter and/or weight the beamvectors. In one example, this could be performed prior to calibrating the radar sensor.

In a preferred embodiment of the computer-implemented method according to the present disclosure, wherein the method comprises performing a plurality of scans using the radar sensor. Optionally, the method comprises modifying the obtained measurement data by one or more of the following:

- pre-filtering of beamvectors;
- applying a signal-to-noise-ratio;
- applying a single scatterer check;
- applying a stationary target check.

Performing the plurality of scans aids in improving calibrating the radar sensor.

Depending on the environment, circumstances and/or field of applications, it may be beneficial to perform the afore-mentioned modification steps. For instance, a high traffic city may have different requirements than an artificial calibration scenario. Thereby, a pre-filtering or the like may be useful.

Applying the single scatterer check is a type of a statistical check. For instance, it can be determined whether the beamvector is a superposition of several targets (which may also be referred to as objects) or whether it comprises the ideal beamvector of a single point target. This may be understood similarly to what corner reflectors perform.

It may be possible that the checks and/or pre-filtering of beamvectors, in particular the stationary target check may include calculating an initial (diagonal) calibration matrix. This may be performed by one single chamber measurement.

In a further preferred embodiment of the computer-implemented method according to the present disclosure, calibrating the radar sensor comprises determining, based on the one or more accumulated data sets and the angle data, a calibration matrix for the radar sensor, wherein, preferably, calibrating the radar sensor comprises calibrating one or more antennas of the radar sensor.

The calibration matrix has the advantage that it can be stored and/or saved, for instance in a non-transitory computer-readable memory medium. The calibration matrix may be employed at any time, in case the need arises. For instance, the calibration matrix may be used in a future time for the same and/or a similar radar sensor. Further, the calibration matrix may be slightly varied over time to compensate any variations of the radar sensor over time. This may be subject to the field of application of the radar sensor.

In a preferred embodiment of the computer-implemented method according to the present disclosure, the method is further comprising: determining, based on the calibration of the radar sensor, an operating instruction for a vehicle affecting a task of a vehicle assistance system, wherein the task comprises at least one of:

- displaying a detected object on a display of the vehicle;
- conducting a vehicle path planning;
- triggering a warning;
- affecting control of the vehicle during a parking process and/or during driving;
- mapping and/or creating, based on the calibration of the radar sensor, reference maps for further applications.

In this manner, the method allows to assist a driver and/or passengers of a vehicle by using the method for online calibration of a radar sensor in the environment of the vehicle, in particular for detecting objects. For example, it may be used for automatically avoiding objects in a traffic situation based on the detected object, for warning a user from obstacles that might intercept the course of the vehicle, and/or for assisting a user in parking or driving the vehicle.

A further aspect of the present disclosure concerns a data processing apparatus comprising means for carrying out the method according to any one of the aspects and/or embodiments described herein.

Yet a further aspect of the present disclosure concerns a computer program comprising instructions, which when executed by a computer, cause the computer to carry out one of more, preferably all of the method steps according to any one of the aspects and/or embodiments described herein.

Further, another aspect of the present disclosure concerns a vehicle comprising the apparatus as described in here. Optionally, the vehicle further comprises a sensor, in particular a radar sensor.

It is noted that the apparatus, computer program and vehicle as outlined herein may include means for implementing all aspects and/or embodiments as outlined herein, even if these may rather be described in the context of method steps. Furthermore, the features and advantages described with reference to the method steps may equally be applicable to the apparatus, computer program, and vehicle.

Likewise, it is also to be understood that the features and advantages described with reference to an apparatus, computer program, and vehicle may equally be applicable to the method steps.

## Brief Description of the Drawings

Various aspects of the present invention are described in more detail in the following by reference to the accompanying figures without the present invention being limited to the embodiments of these figures.

Fig. 1    shows a schematic flow chart of obtaining an exemplary radar data cube according to the prior art.

Fig. 2    shows a block diagram of a method according to an embodiment of the present disclosure.

Fig. 3    shows an exemplary process for accumulating over the range dimension of a radar data cube according to an embodiment of the present disclosure.

Fig. 4    shows result data when employing the method according to an embodiment of the present disclosure.

Fig. 5    shows further result data when employing the method according to an embodiment of the present disclosure.

Fig. 6    shows a vehicle according to an embodiment of the present invention.

## Detailed Description

Definitions

The term chamber calibration is used in the context of calibrating a radar sensor using a chamber. For instance, in a preferably low-reflection absorber chamber, the radar sensor is calibrated using an integrated radar target simulator. Further, the radar sensors may be rotated around their radiation center in horizontal and vertical directions for calibrating.

In the context of the present disclosure, the radial velocity may be used synonymously to the range rate. In one example, the radial velocity corresponds to (-1) * Doppler value.

The term beamforming refers to focusing the radar sensor's transmitter and receiver in a particular direction. Beamforming may comprise an electronic steering of a main antenna lobe or beam of a radar sensor. In one example, beamforming may comprise spatial filtering.

A beamvector may be understood in that it contains phase and/or amplitude information of a signal (such as an electromagnetic wave) received from antennas comprised by the radar sensor. Such antennas may be spatially distributed. In particular, a beamvector may contain information about phase differences of the signal obtained by the antennas. In one example, such beamvector may be used to calculate an angle of the detection (e.g., azimuth and/or elevation).

The term FFT means Fast-Fourier Transform.

The term FMCW means frequency modulated continuous wave (radar). FMCW is a preferred radar technique compared to CW, i.e. continuous wave (radar). The frequency modulation provides for additional information to be captured, such as the time. Thereby a distance to an object can be determined.

The term CFAR means Constant False Alarm Rate.

The term AFRR means angle from range rate, which substantially corresponds to angle from radial velocity.

The term angle may be understood as the incident angle of an impinging wave received from an object to be detected. Other meanings of the term angle as known to the skilled person in the present context are certainly encompassed.

A covariance matrix may be understood as a square matrix giving a covariance between each pair of elements of a given random vector.

## Description of the figures

In the following, the invention is described with reference to the accompanying figures in more detail. However, the present invention can also be used with any other embodiments not explicitly disclosed hereafter.

While specific feature combinations are described in the following with respect to exemplary embodiments of the present invention, it is to be understood that not all features of the discussed embodiments have to be present for realizing the invention, which is defined by the subject matter of the claims.

The disclosed embodiments may be modified by combining certain features of one embodiment with one or more features of another embodiment. Specifically, the skilled person will understand that features, components and/or functional elements of one embodiment can be combined with technically compatible features, components and/or functional elements of any other embodiment of the present invention given that the resulting combination falls within the definition of the invention provided by the claims. The skilled person also understands that certain features may be omitted in so far as they appear dispensable.

Throughout the present figures and specification, the same reference numerals refer to the same elements. The figures may not be to scale, and the relative size, proportions, and depiction of elements in the figures may be exaggerated for clarity, illustration, and convenience.

## Radar fundamentals

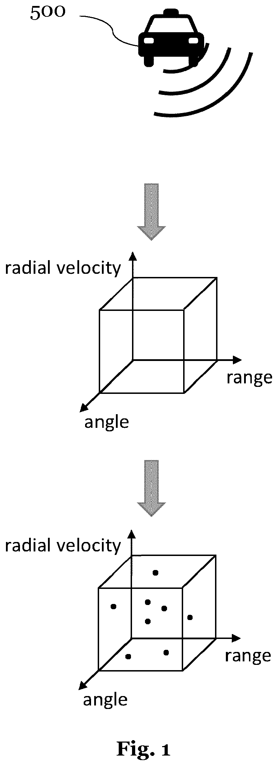

Fig. 1 shows a vehicle 500, in particular a car 500, having a radar sensor. It is noted that Fig. 1 serves the purpose to explain background knowledge of radars and is not to be construed limiting to one or more or all of the method steps of the present disclosure. However, Fig. 1 can be used to support an understanding of some aspects and/or embodiments of the present disclosure. A transmitter in the radar sensor of the vehicle 500 emits electromagnetic waves. These waves may have a frequency from about 77 to 81 GHz, such as 78 GHz, which interact with an object (also referred to as target) and reflect back to a receiver of the radar sensor of the vehicle 500.

Received information may be gathered in the form of a radar data cube comprising three dimensions: range (also corresponds to fast-time samples), radial velocity (also corresponds to slow-time samples), and angle (also corresponds to spatial sampling).

The range can be determined by employing for instance a FMCW radar. The modulated signal that is transmitted can be mixed with the transmitted signal to obtain a beat frequency, which gives information of the time t that the signal requires for one round trip (from transmitter to receiver). The time information can be used to determine the range r ($c_0$ being the speed of light, i.e., $3 \cdot 10^8$ m/s):

$$r = \frac{c_0 \cdot t}{2} \qquad (1)$$

The radial velocity can be obtained, for instance, by transmitting a train of equidistant FMCW chirps. The radial motion induces a phase shift between the transmitted and received signal, which can be used to determine the radial velocity (doppler) of an object. The range and doppler determination may thus be determined by frequency analysis (also referred to as range-doppler analysis), such as an FFT.

The angle of objects are obtained by employing multiple transmitters and receivers (e.g. in the form of an array comprised by the radar sensor) and by performing a space filter. This may also be referred to as beamforming processing.

Employing a Constant False Alarm Rate (CFAR) method allows to convert the data cube into a radar point cloud for target detections.

Typically, CFAR may be employed before space filtering is employed. Further, CFAR is usually performed subsequent to determining the range and doppler by frequency analysis (FFT).

The afore-mentioned steps may be implemented on a digital signal processing (DSP) device.

## Embodiments of the method of the present disclosure

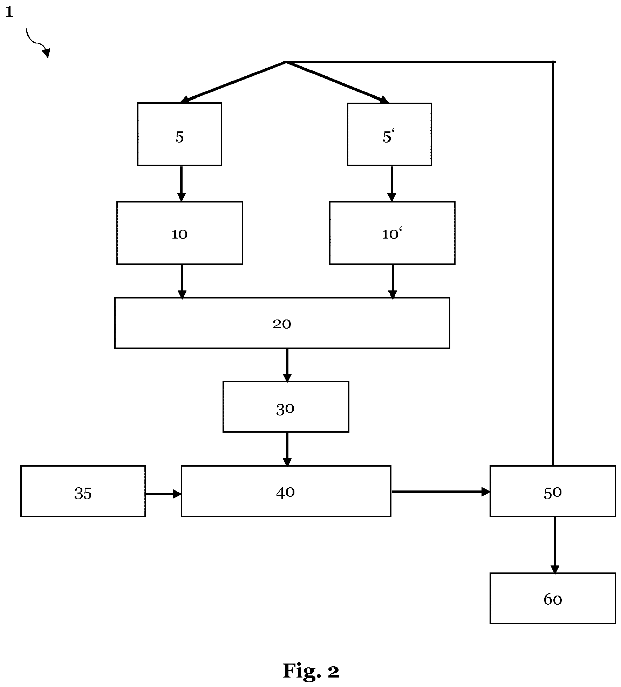

Fig. 2 shows a block diagram of a method 1 according to an embodiment of the present disclosure.

In step 5, measurement data from a radar sensor by one or more radar signals is obtained, wherein the measurement data is indicative of a radial velocity of an object. The object could be any object. For instance, the object could be a further car in traffic.

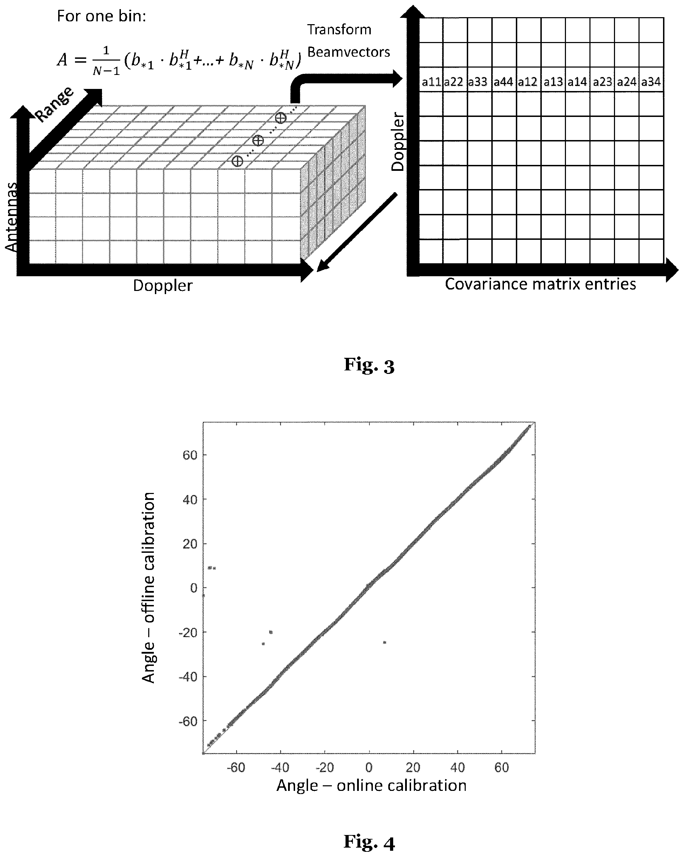

In step 20, one or more data sets indicative of a variation of the one or more radar signals is determined, based on the obtained measurement data. The one or more data sets indicative of a variation of the one or more radar signals may additionally or alternatively be understood as being indicative of a change of the one or more radar signals. For instance, the data sets may be implemented in the form of covariance matrixes. In one example, the covariance matrix may be an unnormalized correlation of the (zero-mean) radar signal with itself. As a further example, the radar signal that impinges on antennas comprised by the radar sensor could be considered as a stochastic process and the covariance matrix could be considered as being associated with an expectation value thereof. As an example, covariance matrices may be built in step 20, which is described in greater detail with respect to Fig. 3. Thereby, it may be understood that accumulation of the one or more data sets indicative of a variation comprise accumulation over the range dimension.

In step 30, angle data relating to the object, based on the one or more data sets and/or based on the obtained measurement data may be determined. In one example, the determined angle data may form part of the ground truth angle for the online calibration method 1 described herein. This angle data may be provided by angle from radial velocity calculations (i.e., angle from range rate calculations, AFRR). This could be done for each radial velocity bin of the radar data cube of the measurement data. Such a radial velocity (doppler) bin may be understood as a slice in the radar data cube of one radial velocity (doppler) interval and/or value.

It is noted that an ambiguous angle labelling process may be performed in step 30, and ambiguous regions that are prevailing are usually resolved by a disambiguation process. However, this disambiguation may optionally be omitted according to an embodiment of the present disclosure. Thereby, the method 1 may comprise using ambiguous angles.

In one example, this ambiguity may be caused by the velocity profile for instance for stationary objects and/or targets (which could be expressed by a function), provided by the measurement data indicative of the radial velocity. In particular, attributable to the trigonometric shape of the velocity profile function, the angle from AFRR may not be directly resolvable for a certain portion of the angle range. This may also apply to a portion of the radial velocity bins (also referred to as doppler indices).

Ambiguous data may be caused in one example by aliasing effects due to violation of the Nyquist-Shannon theorem at high and/or low radial velocities outside an unambiguous region (of, e.g., a plot having the radial velocity as the y-axis and having an angle as the x-axis). This may be due to inherent constraints of a radar sensor subject to a maximum unambiguous velocity and a maximum resolvable velocity. While the obtained radial velocity may resemble a radial velocity value within an unambiguous region of the radar sensor, this radial velocity value may not be the actual radial velocity of the object, but an ambiguous radial velocity in a region outside the unambiguous region. In an illustrative example, the afore-mentioned ambiguity may be important when the radar sensor is moved (e.g. the vehicle) is moved with a velocity greater than the one of the unambiguous region.

In one example, when dispensing with the disambiguation process, both ambiguous angles may be used and two beamvectors may be provided. Ambiguous angles may be used to create one or more combined ideal beamvector. As an example, the velocity profile described herein may not be injective (e.g., a function that maps distinct elements of its domain to distinct elements) in such cases. Thereby, the ambiguous radial velocity (doppler) indices may contain at least two solutions for the angle.

AFRR may be determined based on the velocity profile equation (4, below):

$$v_x = -\omega^{veh} \cdot L_y + v_x^{veh} \qquad (2)$$

$$v_y = \omega^{veh} \cdot L_x + v_y^{veh} \qquad (3)$$

$$\begin{bmatrix} v_x^S \\ v_y^S \end{bmatrix} = R_{\beta_M} \begin{bmatrix} v_x \\ v_y \end{bmatrix} \qquad (4)$$

In the above equations, $v_x^{veh}$, $v_y^{veh}$, $\omega^{veh}$ are the longitudinal velocity, lateral velocity and yaw rate of the ego vehicle, respectively; $L_x$ and $L_y$ are the sensor mounting positions, respectively; $R_{\beta_M}$ is the rotation matrix with angle $\beta_M$; $v_x^S$ and $v_y^S$ are the longitudinal and lateral radar sensor velocities, respectively. Based on the following relationship (5) between the angle $\theta$ and the doppler d (corresponding to -radial velocity)

$$d = \cos(\theta) v_x^S + \sin(\theta) v_y^S \qquad (5)$$

the angle $\theta$ can be derived. For this purpose, equation (5) is solved, which can lead to two solutions for $\theta$. For solving such ambiguities, a first logical check can be performed, e.g., by way of a quadrant check. Optionally a second check may be performed, which may require a pre-calibrated matrix. It is noted that this second check may be according to the present disclosure.

In step 40, calculating of one or more processed data sets is performed. In particular, the method 1 also involves obtaining information of one or more antennas of the radar sensor and of expected ideal measurements and calculating the one or more data processed data sets is based on the one or more data sets, the angle data and the information of one or more antennas of the radar sensor.

Step 40 may comprise accumulation 40 over the radial velocity dimension of the measurement data. The step of obtaining measurement data, the step of determining the one or more data sets and the step of determining angle data are performed one or more, preferably a plurality of times. In this respect, one or more further matrices may be comprised that form part of a sum and can, thus, be subject to a summation. This summation can therefore be performed one or more times. As mentioned elsewhere herein, this accumulation may comprise additional processing, such as additional processing between each time said accumulation is performed. This additional processing may comprise creating autocovariances of ideal beamvectors using angle data which may be combined with the one or more data sets during accumulation. In this manner, it could be understood that the same assignment of radial velocity (AFRR) to ideal beamvector autocovariance is employed as radial velocity values to the one or more data sets (accumulation in step 20).

Optionally, in step 10 of Fig. 2, a modification of the obtained measurement data may be performed. This may comprise pre-filtering of beamvectors, applying a signal-to-noise-ratio (SNR), applying a single scatterer check and/or applying a stationary target check. In one example, a selection of the beamvectors, e.g., to determine suitable samples beforehand may be performed. The stationary check may involve having an initial (diagonal) calibration matrix e.g., given by one single chamber measurement.

Optionally, in step 35, the method 1 comprises weighting of or more values of the one or more data sets. The angle data obtained from range rate (AFRR) in step 30 may not be equally distributed along the angular spectrum. Hence, an additional weighting facilitates improved results for the calibration. The values of the weighting may be calculated by the magnitude of the derivative of the angle from the doppler function given the current ego-motion. This may be multiplied by a doppler resolution. The weighting may comprise scaling of ideal beamvectors in the step of calculating 40 one or more processed data sets used for the online calibration method 1.

In step 50, it is checked whether one or more stopping criteria are fulfilled. This may aid in determining whether performing the method steps as described herein should be terminated. The stopping criteria may depend on various aspects as described herein. For instance, the stopping criteria may comprise the number of scans, information of the host, such as the velocity of the vehicle comprising the radar sensor. If one or more of the stopping criteria are fulfilled, the method 1 proceeds to step 60. If no stopping criteria is fulfilled, the method 1 may proceed to step 5 (and to step 5') for a further scan. In this manner, an internal counter for the number of scans may be increased by one.

In step 60, after one or more of the stopping criteria are fulfilled, the method 1 proceeds with determining, based on the one or more data sets and the angle data, a calibration matrix. This calibration may also be based on the one or more processed data sets.

Optionally, in step 5', the method 1 comprises obtaining data associated with the host motion. This data could comprise the velocity of the vehicle and/or the velocity of the radar sensor comprised by the vehicle.

Optionally, in step 10', the method 1 comprises a similar step as in step 10, and/or similar sub-steps of step 10 regarding the obtained data associated with the host motion.

The method 1 facilitates that the radar data cube (or at least some of its dimensions and/or data) can be employed. The radar data cube is described in greater detail elsewhere herein. In the prior art, usually individual data points in the radar data cube have to be employed, i.e., detections of the radar data cube and their related beamvectors (i.e., peaks in the range-doppler map). As the method disclosed herein facilitates employing the radar data cube, it can also use data in the form of beamvectors in close proximity to said peaks in the range-doppler map.

The angle data relating to the object that is determined is based on the obtained measurement data, i.e., the radial velocity. The radial velocity may correspond to the range rate. In the prior art, usually angle data is obtained from angle finding methods using beamvectors. In other examples, covariance matrices may be applied. This approach in the prior art has the disadvantage that a calibration is required. As this calibration may not have been performed prior to using the radar sensor in the field. This particularly applies to radar sensors for which online calibration is to be performed. Such an approach of the prior art may not be applicable in these cases. Accordingly, the inventors paved a way to determine the angle data based on the radial velocity rather than having to rely on angle finding methods using beamvectors. In one example, the angle data may be obtained through an angle from range rate (AFRR) according to the present disclosure.

The accumulation as described herein may comprise summing up the one or more data sets. This may comprise, in one example, using the angle data relating to the object for creating ideal beamvectors (as described elsewhere herein). This accumulation has proven to be advantageous in that it can be performed, for instance, over several scans. One scan may be considered as transmitting and/or receiving radar signals. Preferably one scan may be considered as transmitting and receiving radar signals. In this manner, the method combines advances of online calibration with advances usually only performed in offline calibration approaches.

The object described herein could be any object, such as a radar detectable object. The object could be any object from the environment of the radar sensor. The object could be the stationary environment. The radial velocity may be the rate of change of distance or range between two points. Thereby, the radial velocity may be independent on which point may be moving and which point may be stationary.

Fig. 3 shows exemplary process steps for accumulating over the range dimension of the radar data cube according to an embodiment of the present disclosure. On the left side, a radar data cube is depicted, having the doppler (corresponding to the radial velocity) dimension, as well as the range dimension and antennas. It is understood that the range dimension as generally referred to in the present disclosure may contain range samples or fast-time samples. It is noted that the angle data may not be known before calibration according to the method described herein. Accumulation over the range dimension as depicted in Fig. 3 allows to reduce the range dimension. Instead, the range dimension is used as artificial snapshots. The oblique arrow on the right hand side of the radar data cube in Fig. 3 indicates that the range dimension is removed, and instead artificial snapshots are employed. For each doppler bin, the calculation of the matrix A is performed having the doppler values and corresponding covariance matrix entries, as exemplarily shown on the right-hand side of Fig. 3.

Fig. 4 shows result data when employing the method according to an embodiment of the present disclosure. The x-axis shows the estimated angle data relating to an object using the method according to an embodiment of the present disclosure. The y-axis shows, for comparison, the estimated angle data relating to an object using an offline calibration approach. The result data is taken from a radar sensor disposed in a left center portion of a vehicle.

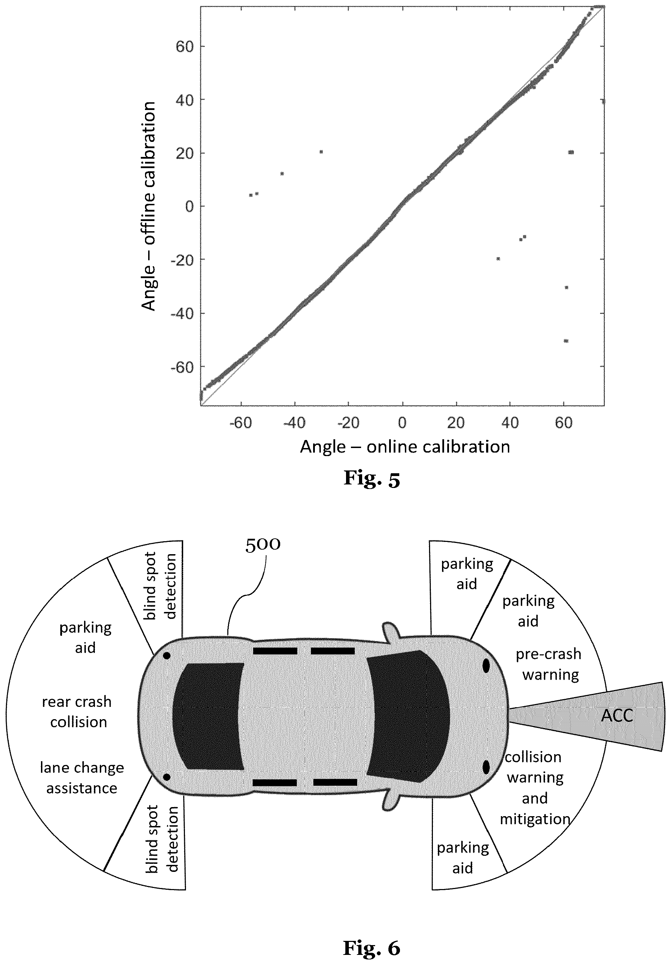

Fig. 5 shows further result data when employing the method according to an embodiment of the present disclosure. The x-axis and y-axis are similar as explained with reference to Fig. 4. In Fig. 5, the result data is taken from a radar sensor disposed in a rear left portion of a vehicle.

As can be gathered from Fig. 4 and Fig. 5, the method according to an embodiment of the present disclosure shows a high accuracy in terms of the angle determined using the online calibration method described herein, when compared with classical offline calibration approaches proposed in the prior art.

Fig. 6 shows a vehicle 500 according to an embodiment of the present invention. In this example, the vehicle 500 is a car. However, in other examples, the vehicle 500 may be any one of a ship, a drone, a robot, a motorbike, a truck, or other vehicles 500 that may benefit from considering the environment in their respective actions/operations. The vehicle 500 may comprise an advanced driver-assistance system, ADAS, wherein the method as described herein can be applied in said ADAS. This may be illustrated in that performing the method, such as the online calibration, provides an improved calibration for angle finding. Such angles may be used in any kind of task that the ADAS performs as described further below (e.g., to give positional information of road users and of the environment of the vehicle 500). It may also be possible that the method as described herein is performed by the ADAS. This may be the case, since, as mentioned elsewhere herein, the advances of the method are that it provides for online calibration and can, thus, be applied during application in the field.

The ADAS may perform obtaining measurement data and determine a radial velocity, range and/or angle of on object in its surrounding using a calibrated radar sensor, as described herein. Accordingly, the vehicle 500 assistance system may trigger one or more actions. Such actions may be any action performed by ADAS.

In particular, the ADAS may perform one or more of the following non-exhaustive actions: it may determine an operating instruction for the vehicle 500 based on the measurement data, affecting the function of the ADAS such as one or more of: displaying the object and preferably also the velocity of the object on a display of the vehicle; conducting a vehicle 500 path planning; triggering a warning; affecting control of the vehicle 500 during a parking process and/or during driving; mapping and/or creating, based on the calibration of the radar sensor, reference maps for further applications.

In a further example, the ADAS may be configured to perform an adaptive cruise control (ACC) function for the vehicle. The vehicle 500 may be, for example, a robot, such as a robot in a manufacturing plant. Collisions with other robots or persons could be avoided by way of the ACC.

Furthermore, the vehicle 500 may comprise a collision warning or mitigation feature that may benefit from the method as described herein.

Yet another application for method and/or the ADAS as described herein and illustrated in Fig. 6 is a pre-crash warning. This may be of importance in a vehicle 500 such as a car, which may be in a severe traffic situation, such as a traffic accident situation. In such a situation, the pre-crash warning may trigger security relevant applications such as an airbag to avoid harm to the driver and/or the passengers within the vehicle.

As also depicted in Fig. 6, a rear crash collision avoidance could be implemented by the ADAS, implementing the method described herein. Moreover, another potential application is to aid a driver of a car in a parking operation. The data obtained by the radar sensor may be employed for blind spot detection or as a general parking aid. This facilitates the parking. Moreover, the information may also be used to assist a driver in changing the lane by triggering a warning, if an object is detected that may be accidentally hit during a lane change. This may also be used for realizing fully automatic lane changes.

The method according to the present invention may be implemented in terms of a computer program which may be executed on any suitable data processing device comprising means (e.g., a memory and one or more processors operatively coupled to the memory) being configured accordingly. The computer program may be stored as computer-executable instructions on a non-transitory computer-readable medium.

Embodiments of the present disclosure may be realized in any of various forms. For example, in some embodiments, the present invention may be realized as a computer-implemented method, a computer-readable memory medium, or a computer system.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. In particular, with reference to the appended claims, features from dependent claims may be combined with those of the independent claims and features from respective independent claims may be combined in any appropriate manner and not merely in the specific combinations enumerated in the appended claims.

**List of reference signs**

| 1 | method |
| 5 | method step: obtaining measurement data |
| 5' | method step: obtaining host data |
| 10 | method step: modifying the obtained measurement data |
| 10' | method step: modifying the obtained host data |
| 20 | method step: determining one or more data sets |
| 30 | method step: determining angle data |
| 35 | method step: weighting |
| 40 | method step: calculating |
| 50 | method step: check whether stopping criteria is fulfilled |
| 60 | method step: calibrating |
| 500 | vehicle |

**Claims**

1. A computer-implemented method (1) for calibration of a radar sensor, the method (1) comprising:

   obtaining (5) measurement data from a radar sensor by one or more radar signals, the measurement data being indicative of a radial velocity of an object and comprises a range dimension,
   determining (20), based on the obtained measurement data, one or more data sets indicative of a variation of the one or more radar signals,
   determining (30), based on the one or more data sets and/or based on the obtained measurement data, angle data relating to the object,
   calibrating (60), based on the one or more data sets and the angle data, the radar sensor.

2. The computer-implemented method (1) according to the preceding claim, further comprising obtaining information of one or more antennas of the radar sensor and of expected ideal measurements, wherein the method (1) further comprises calculating (40), based on the one or more data sets, the angle data, and the information, one or more processed data sets,
   wherein calibrating (60) is based on the one or more processed data sets.

3. The computer-implemented method (1) according to the preceding claim,
   wherein calculating (40) comprises weighting (35) of one or more values of the one or more data sets.

4. The computer-implemented method (1) according to the preceding claim,
   wherein weighting (35) of the one or more values of the one or more data sets is performed by scaling ideal beamvectors, wherein the ideal beamvectors are based on a structural arrangement of the radar sensor and/or on an additional angle data of the object.

5. The computer-implemented method (1) according to any one of the preceding claims, wherein determining (30) the angle data of the object comprises ambiguous angle data and the method (1) comprises a disambiguation process.

6. The computer-implemented method (1) according to any one of the preceding claims, wherein determining (20) the one or more data sets indicative of a variation of the one or more radar signals comprises accumulation (20) over the range dimension of the measurement data.

7. The computer-implemented method (1) according to any one of the preceding claims if dependent on claim 2, wherein calculating (40) the one or more processed data sets comprises accumulation (40) over the radial velocity dimension of the measurement data.

8. The computer-implemented method (1) according to any one of the preceding claims, wherein determining (30) the angle data of the object comprises determining (30) the angle data from the radial velocity of the measurement data.

9. The computer-implemented method (1) according to any one of the preceding claims, wherein the step of obtaining (5) measurement data, the step of determining (20) the one or more data sets, and the step of determining (30) angle data are performed one or more times, wherein performing the steps is stopped when a stopping criteria (50) is fulfilled.

10. The computer-implemented method (1) according to any one of the preceding claims, wherein the measurement data is further indicative of one or more of the following:

   - a range of the object;
   - an ego-motion of the radar sensor and/or of a vehicle comprising the radar sensor;
   - information of the radar sensor arrangement, such as a structural arrangement of the radar sensor in a vehicle.

11. The computer-implemented method (1) according to any one of the preceding claims, wherein calibrating (60) the radar sensor comprises determining, based on the one or more accumulated data sets and the angle data, a calibration matrix for the radar sensor.

12. The computer-implemented method (1) according to any one of the preceding claims, further comprising: determining, based on the calibration of the radar sensor, an operating instruction for a vehicle affecting a task of a vehicle assistance system, wherein the task comprises at least one of:

   - displaying a detected object on a display of the vehicle;
   - conducting a vehicle path planning;
   - triggering a warning;
   - affecting control of the vehicle during a parking process and/or during driving;
   - mapping and/or creating, based on the calibration of the radar sensor, reference maps for further applications.

13. A data processing apparatus comprising means for carrying out the method (1) according to any one of the preceding claims 1-12.

14. A computer program comprising instructions, which when executed by a computer, cause the computer to carry out the method (1) according to any one of the claims 1-12.

15. A vehicle comprising the apparatus according to claim 13.

500

radial velocity

angle

range

radial velocity

angle

range

**Fig. 1**

1

**Fig. 2**

For one bin:

$$A = \frac{1}{N-1}(b_{*1} \cdot b_{*1}^H + \ldots + b_{*N} \cdot b_{*N}^H)$$

Transform
Beamvectors

**Fig. 3**

**Fig. 4**

**Fig. 5**

**Fig. 6**

**EP 4 459 315 A1**

Europäisches
Patentamt

European
Patent Office

Office européen
des brevets

# EUROPEAN SEARCH REPORT

Application Number

EP 23 17 1093

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/105733 A1 (STATNIKOV KONSTANTIN [DE]) 6 April 2023 (2023-04-06) | 1,3,6-15 | INV. G01S7/35 |
| Y | * paragraph [0008] * | 2,5 | G01S7/40 |
| A | * paragraph [0012] - paragraph [0013] * | 4 | G01S13/44 |
| | * paragraph [0017] * | | G01S13/58 |
| | * paragraph [0053] - paragraph [0054] * | | G01S13/931 |
| | * paragraph [0060] * | | |
| | * paragraph [0076] * | | ADD. |
| | * figures 1-9 * | | G01S13/34 |
| | ----- | | |
| X | US 2022/120854 A1 (STATNIKOV KONSTANTIN [DE] ET AL) 21 April 2022 (2022-04-21) | 1-4,8, 10-15 | |
| Y | * paragraph [0005] - paragraph [0011] * | 2,5 | |
| A | * paragraph [0022] * | 6,7,9 | |
| | * paragraph [0029] * | | |
| | * paragraph [0051] * | | |
| | * paragraph [0055] - paragraph [0062] * | | |
| | * paragraph [0070] * | | |
| | * paragraph [0074] * | | |
| | * paragraph [0086] * | | TECHNICAL FIELDS SEARCHED (IPC) |
| | * figures 1-12 * | | |
| | ----- | | |
| Y | US 2022/236400 A1 (IURGEL URI [DE] ET AL) 28 July 2022 (2022-07-28) | 5 | G01S |
| A | * paragraph [0064] * | 1-4,6-15 | |
| | * figures 1-8 * | | |
| | ----- | | |

The present search report has been drawn up for all claims

| Place of search | Date of completion of the search | Examiner |
|---|---|---|
| Munich | 21 September 2023 | Köppe, Maro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 1093

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2023

| Patent document cited in search report | | Publication date | Patent family member(s) | | Publication date |
|---|---|---|---|---|---|
| US 2023105733 | A1 | 06-04-2023 | CN | 115932756 A | 07-04-2023 |
| | | | EP | 4160256 A1 | 05-04-2023 |
| | | | US | 11619707 B1 | 04-04-2023 |
| US 2022120854 | A1 | 21-04-2022 | CN | 114371453 A | 19-04-2022 |
| | | | EP | 3985410 A1 | 20-04-2022 |
| | | | US | 2022120854 A1 | 21-04-2022 |
| US 2022236400 | A1 | 28-07-2022 | CN | 114791598 A | 26-07-2022 |
| | | | EP | 4033269 A1 | 27-07-2022 |
| | | | US | 2022236400 A1 | 28-07-2022 |

EPO FORM P0459

For more details about this annex : see Official Journal of the European Patent Office, No. 12/82